# EUROPÄISCHE PATENTSCHRIFT

(11) **EP 3 129 678 B1**
(45) Veröffentlichungstag und Bekanntmachung des Hinweises auf die Patenterteilung: **27.12.2023**
(21) Anmeldenummer: 14715338.1
(22) Anmeldetag: 07.04.2014
(51) Int. Cl.: F16H 25/20, F16H 55/08

(54) **SPINDELMUTTER MIT ASYMMETRISCHEM INNENGEWINDE SOWIE ENTSPRECHENDER GLEITGEWINDETRIEB**
SPINDEL NUT WITH ASYMMETRICAL INTERNAL THREAD AND CORRESPONDING LEAD SCREW DRIVE
ECROU DE BROCHE A FILETAGE INTERIEUR ASYMETRIQUE AINSI QU'UNE TRANSMISSION CORRESPONDANTE

(43) Veröffentlichungstag der Anmeldung: 15.02.2017
(73) Patentinhaber: igus GmbH, 51147 Köln (DE)
(72) Erfinder: JAEKEL, Marco, 51465 Bergisch Gladbach (DE); NIERMANN, Stefan, 50823 Köln (DE)
(74) Vertreter: Lippert Stachow Patentanwälte Rechtsanwälte
(86) Internationale Anmeldenummer: PCT/EP2014/056952
(87) Internationale Veröffentlichungsnummer: WO 2015/154791

(56) Entgegenhaltungen:
- EP-A1- 1 609 755
- EP-A1- 2 581 209
- EP-A2- 2 003 370
- EP-A2- 2 345 817
- DE-B4- 10 362 326
- DE-C- 872 701
- US-A- 4 036 110

## Beschreibung

Die Erfindung betrifft allgemein eine Spindelmutter für einen Gleitgewindetrieb bzw. Gleitgewindeantrieb. Die Erfindung betrifft ferner einen Gleitgewindetrieb zur Umsetzung einer Drehbewegung in eine Längsbewegung oder umgekehrt, mit einer Spindel und einer Spindelmutter, wobei zumindest das Innengewinde der Spindelmutter oder vorzugsweise die gesamte Spindelmutter aus Kunststoff gefertigt ist und das Außengewinde der Spindel eine höhere Festigkeit aufweist als das Innengewinde aus Kunststoff.

Bei Gewindetrieben wird zwischen Wälzgewindetrieben, wie beispielsweise Kugelgewindetrieben mit Kugeln als Wälzkörpern, und sogenannten konventionellen Gleitgewindetrieben unterschieden. Die vorliegende Erfindung betrifft Gleitgewindetriebe. Es ist bekannt, bei solchen Gleitgewindetrieben auf einer Spindel mit hoher Festigkeit, beispielsweise aus Stahl, eine Spindelmutter aus Kunststoff zu verwenden. Ein derartiger Gleitgewindetrieb ist beispielsweise aus der Offenlegungsschrift DE 2300851 vorbekannt.

Gleitgewindetriebe mit Spindelmuttern aus Kunststoff bieten insbesondere den Vorteil, dass sie sehr wartungsarm, insbesondere schmiermittelfrei, betrieben werden können.

Die EP 2 581 209 A1 beschreibt einen solchen Gleitgewindetrieb, speziell zum Betreiben eines Presskolbens, bei welchem Innen- und Außengewinde zueinander asymmetrisch, d.h. mit verschiedenen Geometrien ausgeführt sind. Beim Spindeltrieb gemäß EP 2 581 209 A1 sind die Flanken des Innengewindes der Spindelmutter bezüglich einer Radialebene nicht spiegelsymmetrisch, sondern asymmetrisch ausgebildet. Hierbei weist eine Rückholflanke gegenüber der Arbeitsflanke einen deutlich flacheren Winkel auf, wodurch die Spindelmutter höhere Kräfte in einer Antriebsrichtung aufnehmen kann, da das Gewinde am Zahnfuß der Spindelmutter eine bessere Abstützung erfährt. Durch diese Gestaltung soll auch bei hohen Belastungen, wo bisher üblicherweise Stahl als Material für die Spindelmutter notwendig war, Kunststoff als Material für die Spindelmutter eingesetzt werden können. In Anbetracht dieser Zielsetzung wird die EP 2 581 209 A1 als nächstliegender Stand der Technik betrachtet. Zum Stand der Technik gehört auch ein Gewindetrieb nach dem Oberbegriff in Anspruch 1, wie beispielsweise die EP 2 003 370 A2 offenbart.

Ausgehend vom vorgenannten Stand der Technik ist es eine Aufgabe der vorliegenden Erfindung, eine Spindelmutter, welche vollständig oder zumindest im Bereich ihres Innengewindes aus Kunststoff gefertigt ist, vorzuschlagen, welche eine höhere Lebensdauer bietet und für eine größere Vielzahl von Anwendungen geeignet ist. Es soll ebenfalls ein Gleitgewindetrieb mit einer solchen Spindelmutter vorgeschlagen werden.

Die vorgenannte Aufgabe wird durch eine Spindelmutter für einen Gleitgewindetrieb nach Anspruch gelöst.

In der einfachsten Ausführungsform wird die Aufgabe bereits dadurch gelöst, dass das Innengewinde der Spindelmutter einen Gewindequerschnitt dergestalt aufweist, dass die zum Eingriff in den Gewindegang der Spindel bestimmte Profilschnittfläche der Gewindewendel messbar größer ist als die freie Gangschnittfläche des Gewindegangs der Spindelmutter. Die Schnittflächen sind hierbei Querschnittsflächen betrachtet in einem Längsschnitt durch die zentrale Längsachse der Spindelmutter bzw. der Spindel, was dem schematisierten Profilschnitt entspricht. Die Profilschnittfläche bezeichnet die in dieser Ebene betrachtete Schnittfläche der Gewindewendel bzw. Verzahnung der Spindelmutter, gemessen zwischen einer Parallelen zur Längsachse am Gewindefuß und dem Scheitel bzw. Scheitelpunkt. Die Gangschnittfläche bezeichnet die entsprechend betrachtete freie Fläche des Gewindegangs des Spindelmutter-Gewindes, in welche die Gewindewendel bzw. Verzahnung des Außengewindes der Spindel eingreift.

In bevorzugter Ausführung ist die Profilschnittfläche des Innengewindes der Spindelmutter um einen Faktor von mindestens 1,2 größer als die freie Gangschnittfläche des Innengewindes. Die Gangschnittfläche bezeichnet die freie Fläche des Gewindegangs. Vorliegend ist unter Gewindegang die Aussparung des Gewindes bzw. die Gewinderille zu verstehen und nicht etwa die Gewindewendel bzw. Verzahnung.

In besonders bevorzugter Ausführungsform ist vorgesehen, dass die positive Profilschnittfläche ein Flächenmaß hat, das im Bereich des 1,2-fachen bis 2-fachen, besonders bevorzugt im Bereich des 1,25-fachen bis 1,4-fachen des korrespondierenden Flächenmaßes der Gangschnittfläche aufweist. Hierdurch können auch mit zumindest im Bereich des Innengewindes aus Kunststoff hergestellten Spindelmuttern mit hoher Lebensdauer und zugleich beachtlicher zulässiger Axiallast hergestellt werden. Ein Größenunterschied im Sinne der Erfindung kann ohne Weiteres in die Praxis umgesetzt werden, indem man von einer herkömlichen Gestaltung eines Spindeltriebs mit symmetrischer Verzahnung ausgeht und bei der Spindel beispielsweise Gewindewendel um ca. 10-35% schmaler und Gewindegang um ca. 10-35% breiter als bei symmetrischer Ausführung gestaltet. Entsprechend umgekehrt ist bei der Gestaltung der Spindelmutter vorzugehen.

Zur Steigerung der Anwendungsmöglichkeiten ist es vorteilhaft, wenn die gegenüberliegenden Flanken im Profilschnitt (in der Profilskizze) des Innengewindes der Spindelmutter bezüglich einer Radialebene (senkrecht zur Längsachse) spiegelsymmetrisch ausgeführt sind. Besonders bevorzugt wird ein für Bewegungsgewinde recht großer Flankenwinkel im Bereich von 30° bis 70° vorgesehen, insbesondere im Bereich von 45° bis 70° vorgesehen. Unter Flankenwinkel wird hierbei der Winkel von einer Gewindeflanke zu der gegenüberliegenden Gewindeflanke verstanden. Durch entsprechend optimierte Flankenwinkel lässt sich ein höherer Wirkungsgrad erzielen, wobei zugleich in beide Translationsrichtungen, d.h. unabhängig vom Rotationssinn, hohe Belastungen erzielbar sind.

Zur Vermeidung von Vibrationen und unerwünschter Geräuschentwicklung ist es vorteilhaft, wenn die Übergänge von Flanke zu Gewindescheitel und von Flanke zu Gewindefuß gerundet ausgeführt sind. Dies gilt insbesondere für das Innengewinde der Spindelmutter, jedoch vorteilhafterweise ebenfalls für das Außengewinde der Spindel.

Bei entsprechend gerundeten Übergängen an der Spindelmutter ist es vorteilhaft, wenn diese einen Gewindequerschnitt aufweist, dessen Gewindescheitel zwischen beiden Flanken einer Gewindewendel durchgehend gerundet sind, was erfindungsgemäß vorgesehen ist. So lässt sich anstelle des üblichen Flächenkontakts ein Punktkontakt der Gewindescheitel erzielen, was ebenfalls vibrationsmindernd und geräuschmindernd wirkt. In der Praxis vorteilhaft ist, zumindest für die Gewindescheitel der Spindelmutter, ein Rundungsradius im Bereich des 0,1-fachen bis 0,5-fachen Wertes des Quotienten aus Gewindesteigung geteilt durch die Anzahl n der Gewindegänge (n > 1 bei mehrgängigen Spindeln). Eine durchgehende Rundung kann ebenfalls am Außengewinde der Spindel vorgesehen sein, wobei hier jedoch aufgrund des deutlich schmaleren Gewindefußes auch um einen entsprechend eingangs genannten Faktor reduzierten Krümmungsradius zweckmäßig ist.

Bei entsprechend gerundeter Zahngeometrie ist es vorteilhaft, wenn die Spindelmutter ein Innengewinde mit einer Gewindetiefe aufweist, welche geringer ist als die Gewindetiefe des Außengewindes an der Spindel. Auf diese Weise kann erreicht werden, dass auch bei einem ungewollten Schräglauf lediglich ein minimaler Kontakt (Punktkontakt im Längsschnitt) zwischen den Gewindescheiteln des Außengewindes und dem Grund der Gewinderille (Rillengrund) der Spindelmutter entsteht. Ein Kontakt zwischen den Gewindescheiteln des Innengewindes und dem Rillengrund am Kern des Außengewindes findet so jedenfalls nicht statt, auch nicht bei unerwünschten Querbelastungen oder Verformungen.

Zweckmäßig wird die Spindelmutter aus einem technischen Kunststoff hergestellt. Besonders bevorzugt wird die Spindelmutter aus einem technischen Kunststoff, spritzgussfähigen, vorzugsweise schmierfreien Hochleistungspolymer, insbesondere mit Füll- und/oder Verstärkungsstoffen zur Verbesserung der Dauerfestigkeit und Verminderung der Reibungskoeffizienten hergestellt. Erfindungsgemäß wird die Spindelmutter als einstückiges Teil hergestellt und besteht aus Kunststoff. Dies kann z.B. vorzugsweise in einem Arbeitsgang vollständig im Spritzgussverfahren erfolgen, d.h. die Spindelmutter wird komplett mit dem Muttergewinde gegossen, oder aber durch spanabhebendes Bearbeiten eines Rohlings der gegossen oder extrudiert hergestellt ist. Gegebenenfalls kann in beiden Fällen im Bereich des Innengewindes spanend bzw. spanabhebend nachbearbeitet werden, z.B. durch ab- bzw. ausdrehen. Auch eine Herstellung in zwei nachträglich zusammengefügten Halbschalen ist denkbar und in Spritzgusstechnik leichter realisierbar. Eine einstückige Spindelmutter erreicht jedoch im Vergleich ohne besondere Maßnahmen eine hohe Präzision.

Die erfindungsgemäßen Ausführungsformen sind mehrgängig, um die Belastbarkeit zu erhöhen. Durch eine einstückige Herstellung aus Kunststoff ist es technisch mit relativ geringem Aufwand möglich, Spindelmuttern mit einem dreigängigen, viergängigen, fünfgängigen, usw. bis hin zu einer hohen Anzahl Gewindegängen, z.B. einem zwanziggängigen Innengewinde, herzustellen.

Die vorgeschlagene Spindelmutter bzw. der vorgeschlagene Gleitgewindetrieb eignet sich insbesondere für Übersetzung im Bereich von 1:10 bis 2:1. Entsprechend werden Innen- und Außengewinde zweckmäßig mit Nenndurchmessern (=Außendurchmesser beim Außengewinde) im Bereich von 3-30mm und Steigungen im Bereich von 1-200mm, insbesondere 2,5-100mm hergestellt. In diesem Zusammenhang ist anzumerken, dass der Flankendurchmesser aufgrund der ungleichen Abmessung nicht auf der Höhe liegt, auf welcher von Gewinderille und Gewindezahn gleiche Breite haben. Vereinfacht kann der Mittelwert zwischen Kerndurchmesser und Nenndurchmesser als Flankendurchmesser zur Berechnung der Steigung angesetzt werden.

Die Spindel an und für sich kann eine reine metallische Spindel, beispielsweise aus einem nicht rostenden Cr-Mi-Stahl oder aus Aluminium hergestellt sein. Ebenfalls im Rahmen der Erfindung liegt jedoch eine reine Kunststoffspindel, insbesondere eine Spindel aus einem Kunststoff mit höherer Festigkeit als der Kunststoff des Innengewindes der Spindelmutter bzw. der Spindelmutter insgesamt. Ferner liegt es im Rahmen der Erfindung, eine Kunststoff- oder Metallspindel, z.B. zur Verbesserung von Verschleißfestigkeit und/oder Optimierung von Reibungswerten, mit einer geeigneten Beschichtung zu versehen. Die Erfindung betrifft unabhängig vom Gleitgewindetrieb insgesamt auch eine Spindelmutter an und für sich mit den vorstehend genannten Merkmalen. Diese kann beispielsweise als Flanschgewindemutter ausgeführt sein.

Die Erfindung betrifft schließlich ebenfalls die Verwendung einer derartigen Spindelmutter in einem Gleitgewindetrieb. Typische Anwendungsbereiche der Erfindung sind Bereiche, in denen die Schmiermittelfreiheit besonders vorteilhaft oder wünschenswert ist, beispielsweise in der Reinraum- oder Medizintechnik. Der erfindungsgemäße Gleitgewindetrieb und die entsprechende Spindelmutter eignen sich jedoch für eine Vielzahl anderer Anwendungsbereiche, beispielsweise im Automobilbau, in Automatisierungsanlagen usw..

Weitere Einzelheiten und Vorteile der Erfindung werden im Folgenden, ohne Einschränkung des Schutzumfangs, durch die Beschreibung einer bevorzugten Ausführungsform unter Bezugnahme auf die beigefügten Zeichnungen ersichtlich. Hierbei zeigen:
- FIG.1: ein Perspektivschema eines Abschnitts eines Gleitgewindetriebs gemäß einem Ausführungsbeispiel der Erfindung;
- FIG.2: eine Seitenansicht des Gleitgewindetriebs aus FIG.1;
- FIG.3: einen Längsschnitt auf der Hauptachse von Spindel und Spindelmutter des Gleitgewindetriebs gemäß Schnittlinie III-III in FIG.2;
- FIG.4: einen Gewindequerschnitt der Spindelmutter entsprechend der Vergrößerung IV aus FIG.3.

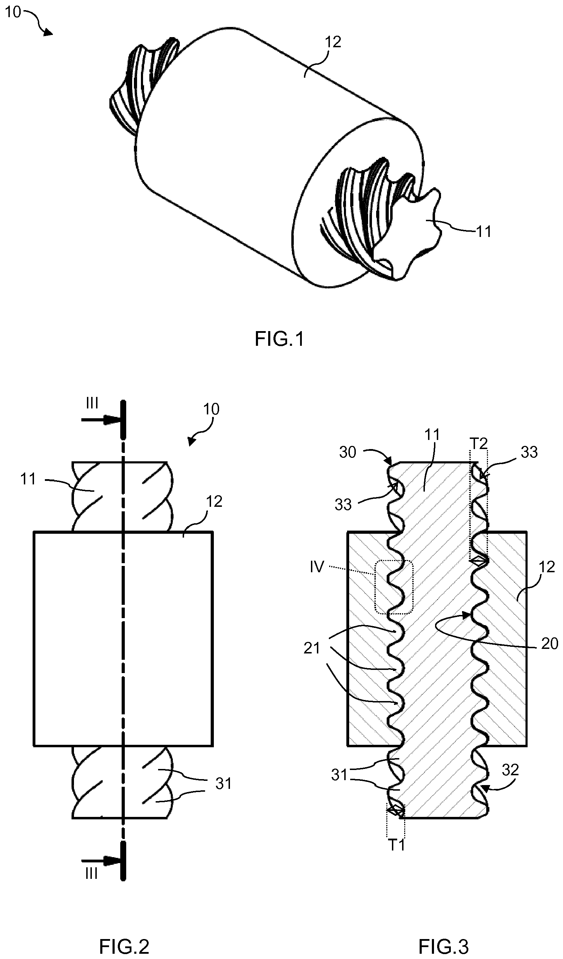

FIG.1-4 zeigen einen Gleitgewindetrieb 10 zur Umwandlung einer Rotation einer Spindel 11 in eine Längsbewegung einer Spindelmutter 12. Die Spindelmutter 12 ist einstückig aus Kunststoff durch Spritzguss gefertigt. Die Spindelmutter 12 besteht aus einem Hochleistungspolymer, insbesondere mit Füll- und/oder Verstärkungsstoffen zur Erzielung eines schmiermittelfreien und reibungsarmen Betriebs. Die Spindel 11 besteht aus nichtrostendem Cr-Ni-Stahl, welcher eine höhere Festigkeit im Vergleich zu technischem Kunststoff der Spindelmutter 12 aufweist. Das Außengewinde 30 der Spindel 11 ist beispielsweise fünfgängig, d.h. hat fünf Gewindewendeln 31. Das Innengewinde 20 der Spindelmutter 12 hat entsprechend auch fünf Gewindewendeln 31 der Spindel an ihren Scheiteln mit etwa dem Radius R2 ebenfalls durchgehend gerundet.

Wie am besten aus FIG.3-4 ersichtlich, sind das Innengewinde 20 und das Außengewinde 30 relativ zueinander asymmetrisch ausgeführt, denn die Gewindewendeln 21 der Spindelmutter 12 sind deutlich grösser dimensioniert als die Gewindewendeln 31 der Spindel 11. Entsprechend konjugiert bzw. komplementär verhalten sich die Gewinderille bzw. der Gewindegang 22 des Innengewindes 20 und der Gewindegang 22 des Außengewindes 30, denn die Gewindewendeln 21 der Spindelmutter 12 stehen im Eingriff mit den Gewindegängen 32 der Spindel 11 und umgekehrt.

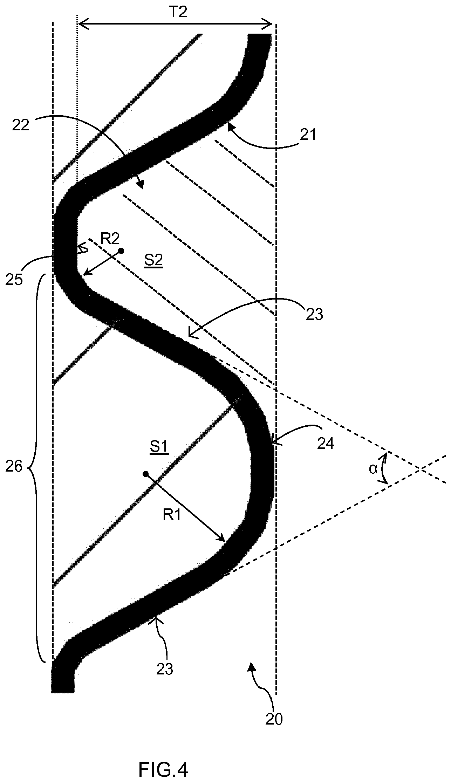

Wie näher aus FIG.4, einer Vergrößerung des Gewindequerschnitts des Innengewindes 20 der Spindelmutter 12, zu entnehmen, hat das Innengewinde 20 einen Gewindequerschnitt, in welchem Profilschnittfläche S1 (grob schraffiert) der Gewindewendel 21 um einen Faktor von hier etwa 1,28-1,32 grösser ist, als die freie Gangschnittfläche S2 (fein schraffiert) des Gewindegangs 22, d.h. der Gewinderille der Spindelmutter 12. Somit erfüllt der Quotient S1/S2 in diesem Beispiel die Ungleichung: 1,28 ≤ S1/S2 ≤ 1,32 (wobei je nach Baugröße bei der Angabe eine Mess- bzw. Herstellungstoleranz von im Bereich von etwa 1-5% angenommen werden kann).

Die Profilschnittfläche S1 und die Gangschnittfläche S2 sind hierbei die im Profilschnitt entsprechend FIG.4 gemessenen Flächen zwischen den gestrichelten Parallelen zur Längsachse, wobei eine Parallele (links in FIG.4) durch den Gewindefuß 26 verläuft bzw. eine Tangente zu den Rillengründen 25 bildet und die andere Parallele eine Tangente zu den Scheiteln 24 bildet.

Anhand der spürbar größeren Abmessung der Gewindewendeln 21 der Spindelmutter 12 im Vergleich zu den Gewindewendeln 31 der Spindel 11 kann eine deutlich höhere Axiallast bei gleich starkem Kunststoff aufgenommen werden, bzw. es kann Kunststoff eingesetzt werden, wo bisher Spindelmuttern aus Metall nötig werden. Dieser Effekt wird synergetisch verstärkt, insbesondere bei großen Gewindesteigungen, dadurch, dass sich mehrgängige Innengewinde, in FIG.1-4 bspw. ein fünfgängiges Innengewinde 20, mit Kunststoff, insbesondere im Spritzguss deutlich leicht oder ggf. überhaupt erst herstellen lassen.

Wie aus FIG.4 ersichtlich sind bei der Spindelmutter 12 die Übergänge von Flanke 23 zu Gewindescheitel 24 und von Flanke 23 zu Rillengrund 25 gerundet zur Vibrationsverringerung. Der Gewindescheitel 24 ist bevorzugt zwischen den Flanken 23 durchgehend (im Profilschnitt kreisrund) gerundet, vorzugsweise mit einem Rundungsradius R1, beispielsweise etwa R1≈1,6mm bei einm 5-gängigen Gewinde mit 25mm Steigung (und 6,35mm Nenndurchmesser), d.h. R1 entsprich dem 0,32-fachen Wert von 1/5 der Gewindesteigung (entsprechend 5mm axialer Baulänge von Gewindewendel plus Gewindegang). Auch der Übergang von jeder Flanke 23 zum Rillengrund 25 ist gerundet mit einem Rundungsradius R2, wobei R2<<R1. Entsprechend ist auch der Profilschnitt der Spindel 11 bevorzugt an beiden Übergängen mit Rundungen versehen. Besonders bevorzugt ist demnach eine Ausführung mit einem Profil ähnlich einem Rundgewinde, d.h. gänzlich ohne Kanten.

Grundsätzlich laufen im Betrieb nur die wendelförmigen Flächen der Flanken 23, 33 gleitend aufeinander. Um bei unerwünschtem Schräglauf oder Beschädigung einen beidseitigen Kontakt bzw. hieraus entstehende Eigenschwingung zu vermeiden, ist die Gewindetiefe T1 des Außengewindes 30 der Spindel 11 leicht grösser als die Gewindetiefe T2 des Innengewindes 20 der Spindelmutter 12. So entsteht ein wendelförmiger Linienkontakt höchstens zwischen den Scheiteln am Außengewinde 30 und dem jeweiligen Rillengrund 25 des Innengewindes 20.

Die gegenüberliegenden Flanken 23, 33 sind beim Innengewinde 20 und beim Außengewinde 30 jeweils spiegelsymmetrisch bzgl. einer gedachten Radialebene durch den Profilschnitt in FIG.3-4 ausgeführt. Sie schließen einen für Bewegungsgewinde unüblich großen Flankenwinkel α ein, im Beispiel nach FIG.1-4 von etwa 50-60°. Aufgrund der Kunststoffeigenschaften und der guten Belastbarkeit der Gewindewendeln 21 des Innengewindes 20 können derart große Flankenwinkel α realisiert werden.

Es bleibt anzumerken, dass die Spindelmutter 12, anders als in FIG.1-3 gezeigt, insbesondere als Flanschgewindemutter ausgeführt sein kann.

### Bezugszeichenliste

FIG.1-4:
- 10: Gleitgewindetrieb
- 11: Spindel
- 12: Spindelmutter
- 20: Innengewinde bzw. Muttergewinde
- 21: Gewindewendel (Innengewinde)
- 22: Gewindegang (Innengewinde)
- 23: Flanke
- 24: Scheitel
- 25: Rillengrund
- 26: Gewindefuß

- 30: Außengewinde bzw. Spindelgewinde
- 31: Gewindewendel (Außengewinde)
- 32: Gewindegang (Außengewinde)
- 33: Flanke
- α: Flankenwinkel
- R1: Radius (am Scheitel)
- R2: Radius (am Rillengrund)
- S1: Profilschnittfläche
- S2: Gangschnittfläche
- T1: Gewindetiefe (Spindel)
- T2: Gewindetiefe (Spindelmutter)

## Patentansprüche

1. Spindelmutter (12) für einen Gleitgewindetrieb, wobei die Spindelmutter ein Innengewinde (29) aufweist, wobei zumindest das Innengewinde (20) der Spindelmutter (12) aus Kunststoff gefertigt ist oder die gesamte Spindelmutter (12) einstückig aus Kunststoff gefertigt ist; wobei die Spindelmutter (12) einen asymmetrischen Gewindequerschnitt aufweist; und
wobei das Innengewinde (20) der Spindelmutter (12) einen Gewindequerschnitt aufweist, in welchem die zum Eingriff in den Gewindegang (32) der Spindel bestimmte Profilschnittfläche (S1) der Gewindewendel (21) grösser ist, insbesondere um einen Faktor von mindestens 1,2 grösser ist, als die freie Gangschnittfläche (S2) des Gewindegangs (22) der Spindelmutter;
**dadurch gekennzeichnet, dass**
die Spindelmutter (12) einen Gewindequerschnitt aufweist, dessen Übergänge von Flanke (23) zu Gewindescheitel (24) gerundet sind und dessen Gewindescheitel (24) zwischen den Flanken (23) durchgehend gerundet sind; und dass die Spindelmutter (12) mehrgängig ausgeführt ist.

2. Spindelmutter nach Anspruch 1, **dadurch gekennzeichnet, dass** der Quotient von Profilschnittfläche (S1) zu Gangschnittfläche (S2) einen Wert im Bereich von 1,2 bis 2, insbesondere im Bereich von 1,25 bis 1,4 aufweist.

3. Spindelmutter nach Anspruch 1 oder 2, **dadurch gekennzeichnet, dass** die Übergänge von Flanke (23) zu Rillengrund (25) gerundet sind.

4. Spindelmutter nach Anspruch 1, 2 oder 3, **dadurch gekennzeichnet, dass** der Gewindescheitel (24) zwischen den Flanken (23) entsprechend einem Rundungsradius (R1) im Bereich vom 0,1-fachen bis 0,5-fachen Wert des Quotienten aus Gewindesteigung und Anzahl der Gewindegänge durchgehend gerundet ist.

5. Spindelmutter nach einem der Ansprüche 1 bis 4, **dadurch gekennzeichnet, dass**
- die Spindelmutter (12) mehrgängig mit einer Anzahl von 3 bis 20 Gewindewendeln (21) ausgeführt ist; und/oder
- die Spindelmutter (12) mit einem Nenndurchmesser und einer Steigung für eine Übersetzung im Bereich von 1:10 bis 2:1 ausgeführt ist; und/oder
- die gegenüberliegenden Flanken (23) spiegelsymmetrisch ausgeführt sind mit einem Flankenwinkel (α) für Bewegungsgewinde, insbesondere im Bereich von 30° bis 70°.

6. Spindelmutter nach einem der Ansprüche 1 bis 5, **dadurch gekennzeichnet, dass** die Spindelmutter (12) als Flanschgewindemutter ausgeführt ist.

7. Gleitgewindetrieb (10) zur Umsetzung einer Drehbewegung in eine Längsbewegung oder umgekehrt, mit einer Spindel (11) und mit einer Spindelmutter (12) nach einem der Ansprüche 1 bis 6;
wobei die Spindel ein Außengewinde (30) aufweist, das eine höhere Festigkeit aufweist als das Innengewinde (20) der Spindelmutter; wobei Innengewinde (20) und Außengewinde (30) zueinander asymmetrisch ausgeführt sind;
**dadurch gekennzeichnet, dass**
die Gewindescheitel (24) der Spindelmutter zwischen den Flanken (23) so durchgehend gerundet sind, dass lediglich ein Punktkontakt der Gewindescheitel mit der Spindel entstehen kann; und dass
die Spindel (11) mehrgängig ausgeführt ist.

8. Gleitgewindetrieb (10) nach Anspruch 7,
**dadurch gekennzeichnet, dass** die Gewindetiefe (T2) des Innengewindes der Spindelmutter geringer ist, als die Gewindetiefe (T1) des Außengewindes der Spindel.

9. Gleitgewindetrieb nach einem der Ansprüche 7 oder 8,
**dadurch gekennzeichnet, dass** Spindelmutter (12) und Spindel (11) mehrgängig jeweils mit mehr als zwei und bis zu zwanzig Gewindewendeln (21; 31) ausgeführt sind, vorzugsweise mit Nenndurchmesser und Steigung für eine Übersetzung im Bereich von 1:10 bis 2:1 ausgeführt sind.

10. Gleitgewindetrieb nach einem der Ansprüche 7 bis 9,
**dadurch gekennzeichnet, dass** die Spindel (11)
- vollständig aus Kunststoff;
- vollständig aus Metall, insbesondere aus einem nichtrostenden Cr-Ni-Stahl oder aus Aluminium; oder
- aus Kunststoff oder Metall mit einer Beschichtung, insbesondere einer metallischen Verschleißschutzbeschichtung, zumindest des Außengewindes gefertigt ist.

11. Gleitgewindetrieb nach einem der Ansprüche 7 bis 10 oder Spindelmutter nach einem der Ansprüche 1 bis 6, **dadurch gekennzeichnet, dass** die Spindelmutter (12) einstückig hergestellt ist, insbesondere vollständig im Spritzgussverfahren, oder durch spanendes Bearbeiten eines gegossenen oder extrudierten einstückigen Rohlings.

12. Gleitgewindetrieb nach Anspruch 11 oder Spindelmutter nach Anspruch 11, **dadurch gekennzeichnet, dass** die Spindelmutter (12) aus einem spritzgussfähigen und schmierfreien Hochleistungspolymer, insbesondere mit Füll- und/oder Verstärkungsstoffen, besteht.

## Claims

1. A spindle nut (12) for a lead screw drive, the spindle nut comprising a female thread (29), wherein at least the female thread (20) of the spindle nut (12) is made from plastic or the entire spindle nut (12) is produced in one piece from plastic; wherein the spindle nut (12) has an asymmetrical thread cross-section; and
wherein the female thread (20) of the spindle nut (12) has a thread cross-section in which the profile sectional area (S1) of the thread helix (21), which is intended for engagement into the thread (32) of the spindle, is greater, in particular is greater by a factor of at least 1.2, than the free thread sectional area (S2) of the thread (22) of the spindle nut;
**characterised in that**
the spindle nut (12) has a thread cross-section whose transitions from flank (23) to thread apex (24) are rounded and whose thread apexes (24) are continuously rounded between the flanks (23) and that the spindle nut (12) is of a multi-thread configuration.

2. The spindle nut as set forth in claim 1, **characterised in that** the quotient of the profile sectional area (S1) to the thread sectional area (S2) is of a value in the range of between 1.2 and 2, in particular in the range of between 1.25 and 1.4.

3. The spindle nut as set forth in claim 1 or claim 2, **characterised in that** the transitions from flank (23) to groove bottom (25) are rounded.

4. The spindle nut as set forth in claims 1, 2 or 3, **characterised in that** the thread apex (24) is continuously rounded between the flanks (23) corresponding to a rounding radius (R1) in the range of between 0.1 times and 0.5 times the value of the quotient of the thread pitch and the number of threads.

5. The spindle nut as set forth in one of claims 1 to 4, **characterised in that**
- the spindle nut (12) is of a multi-thread configuration with a number of between 3 and 20 thread helices (21); and/or
- the spindle nut (12) has a nominal diameter and a pitch suitable for a conversion in the range of between 1:10 and 2:1; and/or
- the oppositely disposed flanks (23) are of mirror-image symmetrical configuration with a flank angle (α) for motion threads, in particular in the range of between 30° and 70°.

6. The spindle nut as set forth in one of claims 1 through 5, **characterised in that** the spindle nut (12) is in the form of a flange thread nut.

7. A lead screw drive (10) for converting a rotational movement into a longitudinal movement or vice-versa, comprising a spindle (11) and a spindle nut (12) as set forth in one of claims 1 to 6;
wherein the spindle comprises a male thread (30) which is of a higher strength than the female thread (20) of the spindle nut;
wherein the female thread (20) and the male thread (30) are of an asymmetrical configuration relative to each other;
**characterised in that**
the thread apexes (24) of the spindle nut are continuously rounded between the flanks (23) in such a way that only a point contact of the thread apexes with the spindle can occur; and **in that**
the spindle (11) is of a multi-thread configuration.

8. The lead screw drive (10) as set forth in claim 7, **characterised in that** the thread depth (T2) of the female thread of the spindle nut is less than the thread depth (T1) of the male thread of the spindle.

9. The lead screw drive as set forth in one of claims 7 or 8, **characterised in that** the spindle nut (12) and the spindle (11) are of a multi-thread configuration, with more than two and up to twenty thread helices (21; 31), preferably with a nominal diameter and a pitch suitable for a conversion in the range of between 1:10 and 2:1.

10. The lead screw drive as set forth in one of claims 7 to 9, **characterised in that** the spindle (11) is made
- completely from plastic;
- completely from metal, in particular a stainless Cr-Ni-steel or aluminum; or
- from plastic or metal with a coating, in particular a metallic wear-resistant coating, at least on the male thread.

11. The lead screw drive as set forth in one of claims 7 to 10, or a spindle nut as set forth in one of claims 1 to 6, **characterised in that** the spindle nut (12) is produced in one piece, in particular completely using an injection molding process or by machining of a molded or extruded one-piece blank.

12. The lead screw drive as set forth in claim 11 or the spindle nut (12) as set forth in claim 11, **characterised in that** the spindle nut (12) consists of an injection moldable and lubricant-free high-duty polymer, in particular with filling and/or reinforcing substances.

## Revendications

1. Ecrou de broche (12) pour un entraînement par vis à glissement, l'écrou de broche présentant un filetage intérieur (29), au moins le filetage intérieur (20) de l'écrou de broche (12) étant fabriqué en matière plastique ou l'ensemble de l'écrou de broche (12) étant fabriqué d'une seule pièce en matière plastique;
l'écrou de broche (12) présentant une section transversale de filetage asymétrique; et
le filetage intérieur (20) de l'écrou de broche (12) présentant une section transversale de filetage dans laquelle la surface de coupe de profil (S1) de l'hélice (21) destinée à s'engager dans le filet (32) de la broche est plus grande, en particulier plus grande d'un facteur d'au moins 1,2, que la surface de coupe libre du filet (S2) du filet (22) de l'écrou de broche;
**caractérisé en ce que**
l'écrou de broche (12) présente une section transversale de filetage dont les transitions entre le flanc (23) et le sommet de filetage (24) sont arrondies et dont les sommets de filetage (24) sont arrondis en continu entre les flancs (23); et **en ce que** l'écrou de broche (12) est réalisé à plusieurs filets.

2. Écrou de broche selon la revendication 1, **caractérisé en ce que** le quotient de la surface de coupe de profil (S1) par la surface de coupe de filet (S2) a une valeur comprise entre 1,2 et 2, en particulier entre 1,25 et 1,4.

3. Écrou de broche selon la revendication 1 ou 2, **caractérisé en ce que** les transitions du flanc (23) au fond de rainure (25) sont arrondies.

4. Écrou de broche selon la revendication 1, 2 ou 3, **caractérisé en ce que** le sommet du filet (24) entre les flancs (23) est arrondi de manière continue conformément à un rayon d'arrondi (R1) dans la plage de 0,1 fois à 0,5 fois la valeur du quotient du pas de filetage et du nombre de filets.

5. Écrou de broche selon l'une quelconque des revendications 1 à 4, **caractérisé en ce que**
- l'écrou de broche (12) est réalisé à plusieurs filets avec un nombre de 3 à 20 hélices de filetage (21); et/ou
- l'écrou de broche (12) est réalisé avec un diamètre nominal et un pas du filet pour une transmission dans la plage de 1:10 à 2:1 ; et/ou
- les flancs opposés (23) sont réalisés avec une symétrie spéculaire avec un angle de flanc (α) pour un filetage de mouvement, en particulier dans la plage de 30° à 70°.

6. Écrou de broche selon l'une des revendications 1 à 5, **caractérisé en ce que** l'écrou de broche (12) est réalisé sous forme d'écrou fileté à bride.

7. Dispositif d'entraînement par vis à glissement (10) pour la conversion d'un mouvement de rotation en un mouvement longitudinal ou inversement, avec une broche (11) et avec un écrou de broche (12) selon l'une des revendications 1 à 6,
dans lequel la broche présente un filetage extérieur (30) qui présente une résistance supérieure à celle du filetage intérieur (20) de l'écrou de broche; le filetage intérieur (20) et le filetage extérieur (30) étant réalisés de manière asymétrique l'un par rapport à l'autre;
**caractérisé en ce que**
les sommets de filet (24) de l'écrou de broche sont arrondis en continu entre les flancs (23) de telle sorte que seul un contact ponctuel des sommets de filet avec la broche peut se produire; et **en ce que**
la broche (11) est réalisée à plusieurs pas.

8. Dispositif d'entraînement par vis à glissement (10) selon la revendication 7,
**caractérisé en ce que** la profondeur de filetage (T2) du filetage intérieur de l'écrou de broche est inférieure à la profondeur de filetage (T1) du filetage extérieur de la broche.

9. Dispositif d'entraînement par vis à glissement (10) selon l'une des revendications 7 ou 8,
**caractérisé en ce que** l'écrou de broche (12) et la broche (11) sont réalisés à plusieurs filets, chacun avec plus de deux et jusqu'à vingt hélices de filetage (21; 31), de préférence avec un diamètre nominal et un pas pour une transmission dans la plage de 1:10 à 2:1.

10. Dispositif d'entraînement par vis à glissement selon l'une des revendications 7 à 9,
**caractérisé en ce que** la broche (11) est
- entièrement en matière plastique;
- entièrement en métal, en particulier en acier inoxydable Cr-Ni ou en aluminium; ou
- en matière plastique ou en métal avec un revêtement, notamment un revêtement métallique anti-usure, au moins du filetage extérieur.

11. Dispositif d'entraînement par vis à glissement selon l'une des revendications 7 à 10 ou écrou de broche selon l'une des revendications 1 à 6, **caractérisée en ce que** l'écrou de broche (12) est fabriqué d'une seule pièce, notamment entièrement par moulage par injection, ou par usinage d'une ébauche monobloc moulée ou extrudée.

12. Dispositif d'entraînement par vis à glissement selon la revendication 11 ou écrou de broche selon la revendication 11, **caractérisé en ce que** l'écrou de broche (12) est constitué d'un polymère haute performance moulable par injection et non lubrifié, en particulier avec des charges et/ou des renforts.
